# EUROPÄISCHE PATENTSCHRIFT

(11) **EP 1 051 312 B1**
(45) Veröffentlichungstag und Bekanntmachung des Hinweises auf die Patenterteilung: **12.11.2003**
(21) Anmeldenummer: 99962110.5
(22) Anmeldetag: 01.12.1999
(51) Int. Cl.: B60R 21/00

(54) **ELEKTRISCHE ZÜNDSCHALTUNG FÜR EIN KRAFTFAHRZEUG-INSASSENSCHUTZSYSTEM**
ELECTRIC IGNITION CIRCUIT FOR A MOTOR VEHICLE OCCUPANT PROTECTION SYSTEM
CIRCUIT D'AMORCAGE ELECTRIQUE POUR SYSTEME DE PROTECTION DE PASSAGER D'UN VEHICULE

(30) Priorität: 01.12.1998 DE 19855444; 23.04.1999 DE 19918634
(43) Veröffentlichungstag der Anmeldung: 15.11.2000
(73) Patentinhaber: SIEMENS AKTIENGESELLSCHAFT, 80333 München (DE)
(72) Erfinder: BAUMGARTNER, Walter, D-93197 Zeitlarn (DE)
(86) Internationale Anmeldenummer: DE9903846
(87) Internationale Veröffentlichungsnummer: WO00032445

(56) Entgegenhaltungen:
- DE-A- 2 745 620
- US-A- 5 657 831

## Beschreibung

Die Erfindung betrifft eine elektrische Zündschaltung für ein Kraftfahrzeug-Insassenschutzsystem.

Eine Zündschaltung gemäß dem Oberbegriff des Anspruchs 1 befindet sich bereits im praktischen Einsatz und dient zur Auslösung des Schutzsystems bei einem (unmittelbar bevorstehenden oder gerade erfolgten) Kraftfahrzeugunfall. Das Kraftfahrzeug-Insassenschutzsystem kann hierbei ein oder mehrere Airbags, zum Beispiel Front-Airbags und Seiten-Airbags, ein Gurtstrammersystem und/oder andere, die Kraftfahrzeuginsassen beim Unfall schützenden Komponenten umfassen.

Zur Vermeidung einer fehlerhaften Auslösung des Insassenschutzsystems ist die Zündschaltung üblicherweise zusätzlich zu den Crashsensoren, beispielsweise Beschleunigungssensoren, mit einem Safingsensor versehen, der als redundanter Crashsensor dient und z.B. erst nach Überschreiten eines vorgegebenen Beschleunigungsmindestwerts schließt und damit die Aktivierung der Zündpille erlaubt. Der Safingsensor liegt üblicherweise in Reihe mit der die Zündpille aktivierenden Zündstufe, so daß der Zündpillenstrom über den Safingsensor fließt. Der Safingsensor und seine Schaltkontakte müssen somit strommäßig hoch belastbar sein, damit sie den Zündstrom im wesentlichen verlustfrei und unterbrechungsfrei führen können.

Um in Insassenschutzsystemen auch solche Safingsensoren einsetzen zu können, die nur für geringere Ströme geeignet sind, ist im Bereich des Insassenschutzes in Kraftfahrzeugen auch eine alternative Schaltungsanordnung für Safingsensoren üblich:

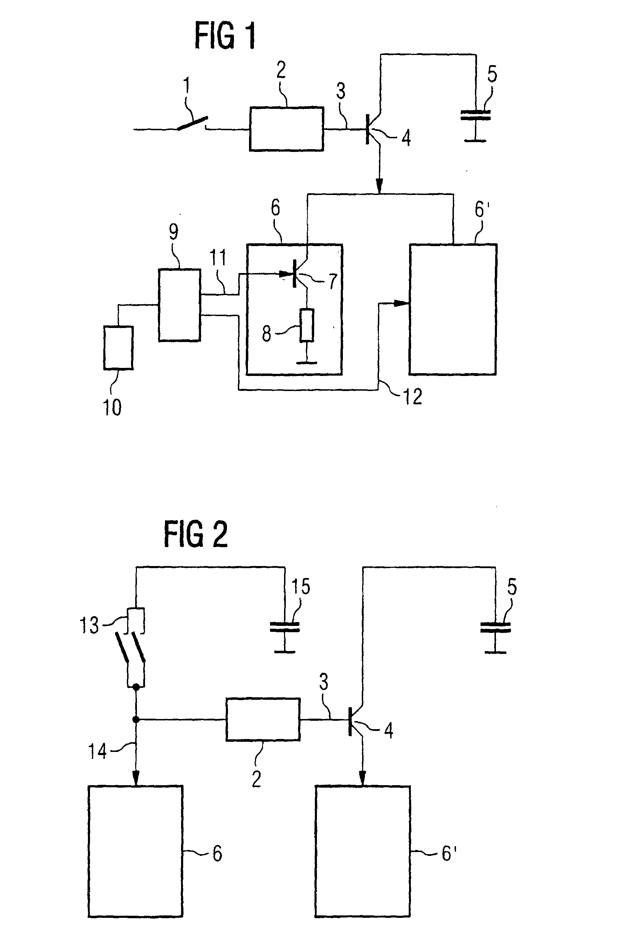

US-Patent 5,657,831 zeigt in der Figur 1 einen Safingsensor 5a, der über eine Integrierstufe 5b und eine Komparatorstufe 5c mit dem Steueranschluß eines Schalttransistors 22 verbunden ist. Übersteigt das integrierte Signal des Safingsensors 5a den für die Komparatorstufe 5c eingestellten Schwellwert, so wird der Schalttransistor 22 leitend geschaltet und die Aktivierung einer Zündpille 1 hängt nur noch davon ab, ob eine Steuereinheit 3b einen weiteren Schalttransistor 21 ebenfalls leitend schaltet.

Bekannt ist ebenso ein zweistufiges Aufblasen eines Airbags als Insassenschutzsystem. Die Figur 1 der deutschen Offenlegungsschrift DE 27 45 620 zeigt ein Insassenschutzsystem, in dem ein Beschleunigungsmeßgerät 7 eine erste Zündendstufe 11 bei entsprechend vorliegendem Beschleunigungssignal dazu veranlaßt, einen Beifahrerairbag 2 auf ein erstes Teilvolumen 2' aufzublasen und erst nach einer Zeitverzögerung, definiert durch ein Zeitverzögerungsglied 9 über eine zweite Zündendstufe 12 auf seine volle Ausdehnung.

Damit bei mehrstufig auslösbaren Insassenschutzkomponenten eine Safingfunktion auch für die zweite und gegebenenfalls weiteren Zündstufen bereitgestellt wird, kann jede Zündstufe mit einem eigenen Safingschalter ausgestattet sein, was jedoch hohen Aufwand begründet. Wenn demgegenüber nur ein einziger Safingschalter für alle Zündstufen dieser Insassenschutzkomponente verwendet wird, ist keine optimale Auslegung der Safingfunktion für die einzelnen Zündstufen, beispielsweise der jeweiligen Safing-Zeitfenster, während deren die Auslösung der einzelnen Zündstufen zugelassen wird, möglich.

Der Erfindung liegt die Aufgabe zugrunde, eine elektrische Zündschaltung für ein Kraftfahrzeug-Insassenschutzsystem mit mindestens einer mehrstufig zündbaren Insassenschutzkomponente zu schaffen, die eine gute Anpassung der Safingfunktionen für die Zündstufen der mehrstufig auslösbaren Insassenschutzkomponente ermöglicht.

Diese Aufgabe wird mit den im Patentanspruch 1 genannten Merkmalen gelöst.

Vorteilhafte Ausgestaltungen der Erfindung sind in den Unteransprüchen angegeben.

Bei der Erfindung ist ein elektronisches Schaltelement vorhanden, das durch den Safingschalter gesteuert wird und mit der Zündstufe in Reihe geschaltet ist, das heißt den Zündstrom bei einer Zündpillenauslösung führt. Das elektronische Schaltelement verfügt über keine mechanischen internen Schaltkontakte und läßt sich problemlos mit entsprechender Strombelastbarkeit auslegen, so daß eine im wesentliche verlustfreie, zuverlässige Zündstromführung gewährleistet ist. Diese Ausgestaltung erleichtert zugleich die Integration des Schaltelements in einen Zündkreis-IC, der beispielsweise die elektronische Steuereinrichtung und den von dieser gesteuerten, mit der Zündpille in Reihe geschalteten Zündtransistor enthält. Der Safingschalter muß das Treibersignal, aber nicht mehr den Zündstrom führen und läßt sich folglich mit deutlich verringerter Nennstromstärke sehr kompakt und verlustarm ausführen.

Zwischen den Safingschalter und das Schaltelement ist ein Zeitglied , im einfachsten Fall eine Halteschaltung, geschaltet, das das Schaltelement-Treibersignal für eine bestimmte, mindestens der zur zuverlässigen Zündpillenzündung notwendigen Zündstromflußdauer entsprechende Zeitdauer aufrechterhält. Hierdurch wird sichergestellt, daß das Schaltelement für die notwendige Mindestzeitdauer zuverlässig durchgeschaltet bleibt, selbst wenn der Safingschalter schon wieder vorzeitig geöffnet haben sollte. Hierdurch sind zugleich die Anforderungen an den Safingschalter erheblich verringert, da keine bestimmte Mindestschließzeitdauer gewährleistet sein muß. Selbst ein nur kurzzeitiges Schließen des Safingschalters genügt, damit über das Halteglied und das elektronische Schaltelement die Zündung zu einem gewünschten, durch die Steuereinrichtung festgelegten Zündzeitpunkt und mit der notwendigen Stromflußdauer innerhalb des Zeitfensters ausgeführt werden kann, das durch das Zeitglied vorgegeben und ausreichend groß bemessen ist.

Die Halteschaltung alternativ, vorzugsweise aber zusätzlich auch eine Zeitverzögerungsfunktion bereitstellen, so daß das Schaltelement erst mit einer bestimmten Zeitverzögerung ab dem Schließen des Safingschalters aktiviert wird. Dies kann insbesondere bei mehrstufigen, mehrere Zündstufen enthaltenden Zündkreisen von Vorteil sein, wenn diese zeitversetzt gezündet werden sollen. Der Safingschalter kann in diesem Fall direkt mit einer weiteren Zündstufe verbunden sein und deren Aktivierung während seines Schließzustands erlauben, während das Safing-Zeitfenster für diejenige Zündstufe, die mit dem elektronischen Schaltelement gekoppelt ist, erst zeitversetzt geöffnet wird und damit erst nach Beginn dieses Zeitfensters eine Zündung der Zündpille dieser Zündstufe (gesteuert durch die diese Zündstufe steuernde Steuereinrichtung) möglich wird.

Vorzugsweise sind die Zündstufen mit getrennten, eigenen Energiespeichern versehen, so daß über die die Safingfunktion bereitstellenden Schaltelemente (mechanischer oder elektrischer Safingsensor oder elektronisches Schaltelement) jeweils nur die Zündströme der zugeordneten Zündpillen fließen. Damit ist die maximale Strombelastung der einzelnen Safingelemente deutlich geringer als bei Bereitstellung eines einzigen Safingsensors für alle Zündkreise, so daß diese Safingelemente für geringere Stromtragfähigkeit ausgelegt werden können. Ferner besteht aufgrund dieser weitgehenden Entkopplung selbst bei Störung des Durchschaltens des Safingelements der einen Stufe noch eine gewisse Wahrscheinlichkeit, daß wenigstens die Safingfunktion der anderen Zündstufe korrekt gewährleistet ist und folglich deren Zündpille zeitrichtig ausgelöst werden kann.

Der Safingschalter kann insbesondere bei einstufigem Zündkreis durch einen einfachen mechanischen Triggerschalter, beispielsweise einen mikromechanischen Beschleunigungsschalter gebildet sein, der lediglich ein schwaches Schaltsignal bei Erreichen oder Überschreiten des vorgegebenen Grenzwerts des zu erfassenden physikalischen Parameters, beispielsweise der Beschleunigung, erzeugen muß und der auch keine eigene Signalhaltefähigkeit, beispielsweise Hysterese, aufweisen muß. Der Safingschalter läßt sich somit miniaturisiert für nur geringe Stromtragfähigkeit auslegen, so daß die Gesamtabmessungen der Zündschaltung verringert werden können. Der Safingschalter kann aber auch als Sensor mit einem nachgeschalteten Integrator und Schwellwertentscheider ausgebildet sein, bei ein beschleunigungsabhängiges Ausgangssignal des Sensors mit integriert und mit einem Schwellwert verglichen wird.

Das elektronische Schaltelement kann von beliebiger Ausgestaltung sein, sofern seine Steuerbarkeit durch ein Treibersignal und eine für den Zündstrom ausreichend hohe Strombelastbarkeit gewährleistet sind. Vorzugsweise wird ein Transistor, beispielsweise ein Feldeffekttransistor, eingesetzt, der sich mit hoher Funktionszuverlässigkeit, geringem Aufwand und vorzugsweise auch in integrierter Ausführung bereitstellen läßt.

Bei der Erfindung ist für die zweite Zündstufe ein elektronisches Safingschaltelement vorhanden, dessen Schaltzustand in Abhängigkeit von zwei unterschiedlichen Eingangsgrößen (Schaltsignale) gesteuert wird. Dies ermöglicht eine gezielte Festlegung der Safingfunktion der zweiten Zündstufe. Die beiden Schaltsignale werden vorzugsweise in Abhängigkeit von dem Schaltzustand des mechanischen Safingschalters und unter Berücksichtigung der Zündauslöseentscheidung der Steuereinrichtung für die zweite Zündstufe gebildet. Hierdurch läßt sich nicht nur erhöhte Redundanz unter entsprechender Verbesserung der Sicherheit gegenüber fehlerhaften Auslösungen erzielen, sondern auch die Safingfunktion feinfühlig an das aktuelle Unfallgeschehen anpassen.

Das Safingschaltelement kann zum Beispiel durch zwei miteinander verbundene, z.B. in Reihe geschaltete Leistungsschaltelemente gebildet sein, deren Steuereingänge getrennt mit jeweils unterschiedlich gebildeten Steuersignalen beaufschlagt werden und die den Zündpillen-Zündstrom nur bei Aktivierung beider Schaltelemente freigeben. Alternativ ist es auch möglich, nur ein einziges, als Leistungschalter ausgebildetes Safingschaltelement im Zündpillen-Zündstrom vorzusehen und dessen Steuersignal in Abhängigkeit von zwei beispielsweise UND-verknüpften Steuersignalen festzulegen.

Das eine Schaltsignal kann durch ein Zeitglied, insbesondere eine Halteschaltung gebildet sein, die bei geschlossenem mechanischem Safingschalter das eine Schaltsignal erzeugt, dies jedoch für ein gewisses Zeitintervall auch nach Öffnen des Safingschalters noch beibehält. Das andere Schaltsignal kann ebenfalls durch ein Zeitglied wie etwa eine Halteschaltung gebildet sein, die durch das von der Steuereinrichtung zur Zündung der zweiten Zündstufe erzeugte Zündsignal gesteuert wird und so ausgelegt ist, daß sie das zweite Schaltsignal auch nach Beendigung des Zündsignals noch für ein bestimmtes Zeitsignal generiert. Damit ist eine ausreichend lange Aktivierung des Safingschaltelements selbst nach Öffnen des mechanischen Safingschalters oder nach Beendigung des Zündsignals für die zweite Stufe sichergestellt. Wenn demgegenüber jedoch zwischen dem Wieder-Öffnen des mechanischen Safingschalters und der Zündentscheidung zum Zünden der zweiten Zündstufe ein zu großes Zeitintervall liegen sollte, werden die beiden Schaltsignale nicht überlappend erzeugt, so daß das Safingschaltelement nicht aktiviert wird und folglich gute Safingfunktion im Sinne des Unterdrückens einer nicht sinnvollen Auslösung gewährleistet.

Vorzugsweise sind die Halteschaltungen als Bestandteil der Steuereinrichtung ausgebildet, die den Auslösealgorithmus für die zweite Zündstufe und auch die Zündroutine selbst enthält.

Die beiden Schaltsignale werden an getrennten Ausgängen der vorzugsweise in Form eines Mikrokontrollers oder Mikroprozessors ausgelegten Steuereinrichtung abgegeben und dann extern zur Erzielung der Safingfunktion miteinander verknüpft. Hierdurch wird die Sicherheit gegenüber Fehlauslösungen im Vergleich mit einem Fall, bei dem nur ein einziger Ausgang zur Erzeugung eines einzigen Schaltsignals für die Durchschaltung des Safingschaltelements erzeugt würde, noch weiter erhöht. Die Wahrscheinlichkeit ist nämlich sehr gering, daß die Steuereinrichtung bei Fehlfunktionen erstens an beiden Schaltsignalausgängen solche Signale erzeugt, daß das Safingschaltelement aktiviert wird, und zweitens zeitgleich noch Zündsignale zur tatsächlichen Zündung der Zündpille generiert.

Zur Erhöhung der Zündwahrscheinlichkeit bei benötigter Zündung der zweiten Zündstufe ist vorzugsweise deren Stromversorgung redundant ausgelegt, nämlich einerseits über die das Safingschaltelement enthaltende Versorgungsstrecke und andererseits über eine direkt vom mechanischen Safingschalter, vorzugsweise über eine Gleichrichterdiode, bereitgestellte Stromversorgung. Diese letztere Stromversorgung stellt damit gewissermaßen einen Bypass für das Safingschaltelement dar, die aber nur während des Schließzustands des mechanischen Safingschalters aktiviert ist und damit mindestens während dieser kritischen Phase eine redundante Stromversorgung für die zweite Zündstufe bei Bedarf bereitstellt.

Die Erfindung wird nachstehend anhand von Ausführungsbeispielen unter Bezugnahme auf die Zeichnungen näher beschrieben.
Es zeigen:
- Fig. 1: eine Zündschaltung mit einem Safingschalter (1, 13) in Form eines mechanischen Triggerschalters, und
- Fig. 2: ein Ausführungsbeispiel der Erfindung mit mechanischem Safingschalter (1, 13) und zündstrommäßig getrennten Zündstufen (6, 6'), und
- Fig. 3: ein weiteres Ausführungsbeispiel der Erfindung.

In den Zeichnungen sind lediglich die Zündschaltungen für das Kraftfahrzeug-Insassenschutzsystem dargestellt. Das Insassenschutzsystem ist, abgesehen von der Zündschaltung, in herkömmlicher Weise aufgebaut und verfügt beispielsweise über Airbags, die durch die Zündpillen ausgelöst werden, ein Gurtstrammersystem, einen ausklappbaren Überrollbügel und/oder dergleichen.

Die in Fig. 1 gezeigte elektrische Zündschaltung enthält einen als Safingschalter dienenden mechanischen Triggerschalter (mechanisch betätigbares Schaltelement) 1, das auf einen bestimmten physikalischen Parameter, beispielsweise die Beschleunigung, eine Winkellage, die Drehrate oder ähnliches, anspricht und bei Überschreiten eines intern mechanisch vorgegebenen Schwellwerts des gemessenen Parameters geschlossen wird. Der Triggerschalter 1 ist fest im Fahrzeug installiert und unterliegt somit den gleichen physikalischen Parametern wie das das den Insassenschutzsystem enthaltende Kraftfahrzeug.

Der Triggerschalter 1 ist mit einem Anschluß mit einem festen Spannungspotential von z.B. 5 V und mit seinem anderen Anschluß einer Halteschaltung 2 verbunden, die bei Schließen des Triggerschalters 1 aktiviert wird und auf einer Ausgangsleitung 3 ein elektrisches Signal mit einer bestimmten Amplitude mit beispielsweise 5V für eine vorbestimmte Zeitdauer abgibt. Diese Zeitdauer ist so bemessen, daß sie mindestens gleich groß ist wie die maximale Zündungsdauer, die nach dem Ansprechen des Triggerschalters 1 zur Zündung der zugehörigen Zündpille äußerstenfalls benötigt wird. Die Ausgangsleitung 3 ist mit dem Steueranschluß eines elektronischen Schaltelements 4 in Form eines Transistors verbunden, der durch das von der Halteschaltung 2 bei deren aktiviertem Zustand abgegebene Signal in die Sättigung gesteuert, das heißt vollständig durchgeschaltet wird.

Der Transistor 4 ist mit einem die Zündenergie speichernden und bereitstellenden Speicherkondensator 5 verbunden, der durch die Kraftfahrzeug-Bordbatterie geladen wird und einen zur zuverlässigen Zündung der Zündpillen der vorgesehenen Zündkreise ausreichenden Energiegehalt besitzt. Mit dem anderen Anschluß des Transistors 4 sind parallel zwei Zündstufen 6, 6' verbunden, die identischen, oder auch unterschiedlichen internen Aufbau besitzen können.

Die Zündstufe 6 enthält ein elektronisches Schaltelement in Form eines Zündtransistors 7, der in Reihe mit einer Zündpille 8 geschaltet ist, deren anderer Anschluß etwa auf Massepotential gelegt ist. Der Steueranschluß des Zündtransistors 7 wird durch eine elektronische Steuereinrichtung 9, beispielsweise einen Mikroprozessor, gesteuert, die über Sensoren 10, beispielsweise Beschleunigungssensoren, einen unmittelbar drohenden oder bereits erfolgten Kraftfahrzeugunfall erfaßt und dann, wenn eine Auslösung des Insassenschutzsystems erforderlich ist, ein den Zündtransistor 7 zum gewünschten Zeitpunkt durchschaltendes Treibersignal auf einer Leitung 11 erzeugt.

Der mechanische Triggerschalter 1 schließt bereits bei einem etwas geringeren Schwellwert der zu überwachenden physikalischen Größe als demjenigen Wert, bei dem die Steuereinrichtung 9 die Notwendigkeit einer Insassenschutzsystemauslösung befiehlt, so daß der Transistor 4 über die Halteschaltung 2 bereits durchgeschaltet ist. Bei Durchschaltung des Zündtransistors 7 entlädt sich damit die im Energiespeicherkondensator 5 gespeicherte Energie in die Zündpille 8 und, sofern auch die zweite Zündstufe 6' durchgeschaltet sein oder werden sollte, auch in die in dieser Zündstufe 6' vorhandene, nicht separat gezeigte Zündpille. Damit eine selektive und gegebenenfalls auch zeitversetzte Zündung der Zündpille in der Zündstufe 6' erreichbar ist, wird der in der Zündstufe 6' enthaltene, mit der dortigen Zündpille in Reihe geschaltete, nicht separat dargestellte Zündtransistor von der Steuereinrichtung 9 über eine separate Steuerleitung 12 gesteuert.

Die Zündstufen 6, 6' sind vorzugsweise in bekannter Weise mit Strombegrenzungsfunktion versehen, die beispielsweise durch entsprechende Teilaussteuerung der Zündtransistoren 7 erreicht werden kann. Hierdurch wird sichergestellt, daß die in dem gemeinsamen Energiespeicherkondensator 5 gespeicherte Energie zuverlässig zur Zündung aller in den Zündstufen 6, 6' und gegebenenfalls weiteren, mit dem Energiespeicherkondensator 5 verbundenen Zündstufen vorhandenen Zündpillen ausreicht. Zur Verringerung des Energiebedarfs kann hierbei auch vorgesehen sein, den Zündtransistor der zuerst zündenden Zündstufe sofort nach erfolgreicher Zündung oder nach Ablauf des für die Zündung maximal vorgesehenen Zeitintervalls, abzuschalten, so daß in dieser bereits gezündeten Zündstufe dann kein weiterer Zündstrom aufgenommen wird.

In der Zündstufe 6 ist lediglich ein einziger Zündtransistor 7 und eine einzige Zündpille 8 gezeigt. Je nach Bedarf können aber auch weitere Zündpillen und/oder Zündtransistoren vorgesehen sein, so daß in dieser ersten Zündstufe mehrere Komponenten, beispielsweise die Front-Airbags, zeitgleich ausgelöst werden können.

Die Halteschaltung 2 ist hierbei so ausgelegt, daß es selbst bei nur kurzzeitigem Einschalten des Triggerschalters 1 ein Ausgangssignal mit einer solchen Dauer abgibt, daß sichergestellt ist, daß der Transistor 4 während der gesamten, für die Auslösung aller Zündpillen aller angeschlossenen Zündstufen maximal vorgesehenen Zeitdauer durchgeschaltet bleibt.

Funktional ist der Transistor 4 somit in Reihe mit dem oder den Zündtransistoren 7 und der oder den Zündpillen 8 geschaltet, wobei diese Reihenschaltung parallel zum Energiespeicherkondensator 5 liegt.

Die Zündstufe 6 kann beispielsweise zur Zündung der Zündpillen für mehrstufig auszulösende Fahrer- und/oder Beifahrer-Airbags sowie zur Zündung eines Gurtstraffersystems dienen, während die Zündstufe 6' zur kurzzeitig späteren Zündung der zweiten Stufe der Airbags, oder zur Auslösung anderer Airbags oder Sicherheitssysteme dienen kann.

In Fig. 2 ist ein Ausführungsbeispiel der Erfindung dargestellt, bei dem getrennte Energiespeicher für die beiden Zündstufen 6 und 6' vorhanden sind. Deren Aufbau und Funktionsweise können gleich sein wie bei dem vorstehend erläuterten Ausführungsbeispiel gemäß Fig. 1, so daß keine weiteren Ausführungen erforderlich sind. Auch die Steuerung durch die nicht separat gezeigte Steuereinrichtung 9 samt Sensoren 10 und Leitungen 11, 12 kann identisch sein. Auch die Halteschaltung 2, das elektronische Schaltelement 4 und der Energiespeicherkondensator 5 können den gleichen Aufbau und dieselbe Funktionsweise wie bei dem ersten Ausführungsbeispiel besitzen und werden daher nicht näher erläutert.

Dieses Ausführungsbeispiel unterscheidet sich von dem ersten Ausführungsbeispiel insbesondere dahingehend, daß als Safingschalter ein mechanischer Safingsensor 13 eingesetzt wird, der über eine Leitung 14 direkt mit der ersten Zündstufe 6 verbunden ist, und daß zusätzlich zum Energiespeicherkondensator 5 ein weiterer Energiespeicherkondensator 15 vorgesehen ist, der mit dem Safingsensor 13 verbunden ist und folglich über diesen die Zündenergie für die Zündstufe 6 bereitstellt. Der Safingsensor 13 ist beispielsweise als mechanischer Beschleunigungsschalter ausgebildet, der bei Überschreiten einer bestimmten, einen drohenden oder bereits erfolgten Unfall signalisierenden Kraftfahrzeugbeschleunigung schließt, so daß die am Zündspeicherkondensator 15 anliegende Spannung dann an die Zündstufe 6 angelegt wird und diese bei Durchschalten des Zündtransistors 7 die Zündpille zünden kann.

Der Safingsensor 13 kann aber auch in sonstiger, bekannter Weise, beispielsweise als Trägheitsschalter, Neigungsschalter, der ab einer bestimmten Fahrzeugschräglage schließt, oder dergleichen ausgebildet sein. Sobald der Safingsensor 13 schließt, wird die Spannung des Zündspeicherkondensators 15 nicht nur an die Zündstufe 6, sondern auch an den mit der Leitung 14 verbundenen Eingang der Halteschaltung des Zeitglieds 2 angelegt, so daß dieses aktiviert wird und über die Ausgangsleitung 3 ein Treibersignal an das Schaltelement 4 mit einer Zeitdauer anlegt, die ausreichend lang ist, damit die gegebenenfalls erst zeitversetzt zündende zweite Zündstufe 6' vollständig und planmäßig gezündet werden kann. Die Halteschaltung 2 stellt auch hier sicher, daß das Schaltelement 4 kontinuierlich während des maximal für die zweite Zündstufe 6' benötigten Zündzeitintervalls durchgeschaltet bleibt, selbst wenn der Safingsensor 13 schon wieder geöffnet haben sollte.

Im Fall einer solchen zeitversetzten Zündung der zweiten Zündstufe 6' kann das Zeitglied 2, das heißt die Halteschaltung, auch mit einer internen Zeitverzögerung versehen sein, durch die die Anstiegsflanken des auf der Ausgangsleitung 3 abgegebenen Treibersignals gegenüber der Anstiegsflanke der eingangsseitig am Zeitglied 2 anliegenden Spannung um ein bestimmtes Zeitintervall verzögert wird. Dieses Zeitintervall ist so bemessen, daß es maximal gleich groß ist wie der systemgemäß vorgegebene Zeitversatz zwischen den Zündungen der Zündpillen der ersten Zündstufe 6 und der zweiten Zündstufe 6'. Damit ist sichergestellt, daß eine Zündung der Zündpille(n) der zweiten Zündstufe 6' frühestens erst mit dem gewünschten Zeitversatz gegenüber der Zündung der ersten Zündstufe 6 erfolgen kann, selbst wenn die Steuereinrichtung 9 bereits vorab ein die Durchschaltung des in der Zündstufe 6' vorgesehenen Zündtransistors bewirkendes Treibersignal erzeugt haben sollte. Durch diese Zeitverzögerungsfunktion wird somit die Einhaltung des gewünschten Zündzeitversatzes zwischen den Zündstufen 6 und 6', die primär durch die Steuereinrichtung 9 diktiert wird, zusätzlich gewährleistet. Die von der Halteschaltung 2 bewirkte Zeitverzögerung kann auch auf einen kleineren Wert als den Zündzeitversatz zwischen den Zündstufen 6 und 6', beispielsweise auf 50% bis 80% dieses Zeitversatzes, eingestellt sein, so daß sichergestellt wird, daß das Schaltelement 4 in aller Regel bereits vor dem Zündtransistor der Zündstufe 6' durchgeschaltet ist.

Gemäß Fig. 2 ist der Safingsensor 13 als Doppelschalter ausgelegt, so daß sich der Stromfluß über die beiden Schaltzweige aufteilen kann. Der Safingsensor 13 kann aber auch als Einzelschalter mit einem einzigen Schaltkontakt ausbildet sein.

Gemäß Fig. 2 kann somit die erste Zündstufe 6 des Insassenschutzssystems über den mechanischen Safingsensor 13 in bislang üblicher Weise gezündet werden. Die zweite Zündstufe 6' besitzt jedoch gewissermaßen einen eigenen elektrischen bzw. elektronischen Safingschalter, nämlich das Schaltelement 4, das nur bedingt vom Safingsensor 13 abhängig ist.

Bei einer abgeänderten Ausführungsform ist es auch möglich, als Safingschalter 4 einen eigenen, mechanischen oder elektrischen Safingsensor zu verwenden, der vollständig unabhängig vom Safingsensor 13 und beispielsweise in identischer Weise aufgebaut ist. In diesem Fall kann auch die Halteschaltung 2 entfallen.

Durch die gemäß Fig. 2 vorgesehene Trennung der Energiespelcherung für die Zündstufen 6 und 6' ist es möglich, die Kapazitätswerte der Zündspeicherkondensatoren 5 und 15 gegenüber dem bei Fig. 1 benötigten Kapazitätswert zu verringern. Es besteht in diesem Fall nämlich keine Gefahr, daß die erste, zeitlich früher gezündete Zündstufe 6 die für die Zündstufe 6' vorgesehene Energiereserve unter den benötigten Minimalwert verringern kann, da sich der Zündspeicherkondensator 5 nicht in die Zündstufe 6 entladen kann. Ferner müssen der Safingsensor 13 und das Schaltelement 4 aufgrund der Trennung der Zündstromkreise auch nur für geringere Strombelastbarkeit ausgelegt werden, da der maximal durch den Safingsensor 13 bzw. das Schaltelement 4 fließende Strom geringer ist als der bei Fig. 1 durch das Schaltelement 4 maximal fließende Summenstrom.

Bei den vorstehenden Ausführungsbeispielen sind zwei Zündstufen vorgesehen. Es ist aber auch möglich, je nach Bedarf eine dritte oder weitere Zündstufe vorzusehen, die dann entweder gemäß dem Vorbild der Fig. 2 mit einem eigenen Energiespeicherkondensator und einem eigenen Schaltelement samt zugehöriger Halteschaltung (jeweils eingangsseitig mit dem Safingsensor 13 verbunden) versehen sein können, oder aber gemäß dem Vorbild der Fig. 1 parallel an den Ausgang des Schaltelements 4 angeschlossen sein können.

Mit der Erfindung ist es somit möglich, zweistufige oder, allgemein mehrstufige Zündgeneratoren mit mehreren Zündstufen, das heißt mehrstufiger Zündung zu schaffen, die den Einsatz unterschiedlicher Arten von Zündstufen und/oder eine Berücksichtigung unterschiedlicher Arten von Schutzwirkungen der jeweiligen Zündstufen, ermöglicht und die Zündstufen je nach Bedarf mit eigenen Safingschaltern auszustatten. Hierbei ist aber gewährleistet, daß die Safingschalter die Zündung einzelner Zündstufen nicht verhindern, selbst wenn sie bereits wieder geöffnet haben sollten. Die Erfindung ermöglicht somit unterschiedliche Anordnungen und Verschaltungen der Zündstufen zur Erzielung gewünschter Systemkonfigurationen, so daß "smart safety"-Systeme aufbaubar sind, die gegebenenfalls für komplexe Chrashmodi geeignet sind und die zuverlässige Vorgabe und Einhaltung gewünschter Zündversätze oder dergleichen ermöglichen.

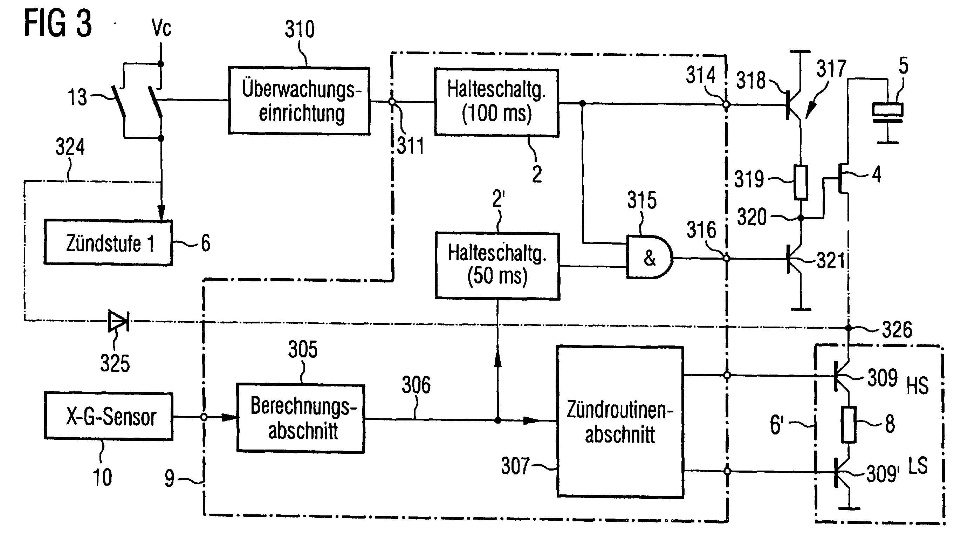

Das in Figur 3 in Form eines Blockschaltbilds dargestellte Ausführungsbeispiel der Zündschaltung umfaßt einen Safingschalter 13, der als mechanischer, beispielsweise bei Uberschreiten eines bestimmten Beschleunigungswerts schließender Schalter ausgebildet ist und in den Spannungsversorgungspfad einer ersten Zündstufe 6 eingefügt ist, die die Zündung der ersten Stufe der zweistufig auslösbaren Insassenschutzkomponente, beispielsweise eines zweistufig auslösbaren Airbags, in an sich bekannter Weise steuert. Der Safingschalter 13 ist vorzugsweise redundant mit zwei internen parallel geschalteten Schaltstrecken in der dargestellten Weise ausgebildet und eingangsseitig an die Bordspannung V_{c} oder eine sonstige Versorgungsspannung angeschlossen. Die Zündstufe 6 enthält in an sich bekannter Weise ein mit der Zündpille verbundenes Schaltelement, bei dessen Aktivierung die Zündpille bestromt wird und zündet.

Zur Steuerung einer zweiten Zündstufe 6' ist eine Steuereinrichtung vorgesehen, die hier als Mikrokontroller 9 ausgebildet ist und eingangsseitig mit einem Unfallsensor 10, z.B. dem zentralen Beschleunigungssensor oder einem ausgelagerten Kollisionssensor, verbunden ist, dessen Sensorsignal die Stärke und den Verlauf des Unfallgeschehen signalisiert. Das Ausgangssignal des Unfallsensors 10 kann gegebenenfalls auch von der Steuereinrichtung der ersten Zündstufe 6 zum Treffen der dortigen Auslöseentscheidung ausgewertet werden. Die Steuereinrichtung 9 enthält einen Berechnungsabschnitt 305, der das

Ausgangssignal des Unfallsensors 10 gemäß einem für die Zündstufe 6 ausgelegten Auslösealgorithmus auswertet. Wenn die im Berechnungsabschnitt 305 ausgeführte Berechnung die Notwendigkeit der Auslösung der zweiten Zündstufe angibt, wird über eine Verbindungsleitung 306 ein Auslösebefehl an einen Zündroutinenabschnitt 307 abgegeben, der daraufhin über zwei Ausgänge der Steuereinrichtung 9 Steuersignale zur Durchschaltung von zwei Zündtransistoren 309, 309' erzeugt, die mit der Zündpille 8 der zweiten Zündstufe so in Reihe geschaltet sind, daß die Zündpille 8 zwischen den Zündtransistoren 309, 309' liegt.

Eine Überwachungseinrichtung 310 überwacht den Schaltzustand des Safingschalters 13 und gibt während dessen Einschaltdauer ein beispielsweise hohen Pegel von 5 Volt aufweisendes Meldesignal an einen Eingang 311 der Steuereinrichtung 9 ab. Die Überwachungseinrichtung 310 kann beispielsweise eingangsseitig an den Ausgang des Safingschalters 13 angeschlossen sein und das dort jeweils vorhandene, bei geschlossenem Safingschalter 13 hohe Potential an den Eingang 311, gegebenenfalls nach Spannungsbegrenzung auf 5 V in Anpassung an den von der Steuereinrichtung 9 verkraftbaren Potentialbereich, anlegen. Die Steuereinrichtung 9 enthält eine erste Halteschaltung 2, deren Ausgangssignal dem Verlauf seines Eingangssignals folgt, wobei aber die abfallende Flanke um ein bestimmtes, durch die Halteschaltung 2 vorgegebenes Zeitintervall von z.B. 100 ms verzögert ist, so daß das Ausgangssignal für diese Zeitdauer länger ansteht als das Eingangssignal. Damit ist gewährleistet, daß das Ausgangssignal der Halteschaltung 2 auch dann noch kurzzeitig ansteht, wenn der mechanische Safingschalter 13 schon wieder geöffnet hat. Die Steuereinrichtung 9 umfasst eine zweite Halteschaltung 2, die auf das auf der Leitung 306 übertragene Zündsignal anspricht und während dessen Zeitdauer und eines zusätzlichen, sich hieran anschließenden und
durch die Haltedauer der Halteschaltung 2' bestimmten Zeitintervalls ein Ausgangssignal hohen Pegels erzeugt. Die Haltedauer des Zeitglieds 13 ist z.B. auf 50 ms eingestellt, so daß das Ausgangssignal des Zeitglieds 13 noch 50 ms länger ansteht als das Zündsignal.

Das Ausgangssignal der Halteschaltung 2 wird einerseits an einen Ausgang 314 der Steuereinrichtung 9 und andererseits an einen Eingang eines UND-Glieds 315 angelegt, an dessen anderem Eingang das Ausgangssignal der Halteschaltung 2' anliegt. Der Ausgang des UND-Glieds 315 ist an einen Ausgang 316 der Steuereinrichtung 9 angelegt. Mit den beiden Ausgängen 314 und 316 ist eine Verknüpfungsschaltung, hier in Form einer transistorisierten UND-Schaltung 317 mit zwei, unter Zwischenschaltung eines Lastwiderstands 319 in Reihe zwischen Spannungsversorgungsanschlüsse geschalteten Transistoren 318 und 321 verbunden. Der Verbindungspunkt zwischen dem Lastwiderstand 319 und dem Transistor 321 bildet den Ausgang 320 des UND-Glieds 315, der an den Steueranschluß eines elektronischen Safingschaltelements 4 in Form eines Schalttransistors (Safing-Transistors) angeschlossen ist. Das Safingschaltelement 4 ist zwischen einen die Zündenergie zum Zünden der Zündpille 8 bereitstellenden Energiespeicher 5 und den Zündtransistor 309 geschaltet, so daß eine Bestromung der Zündpille 8 nur bei geschlossenem Safingschaltelement 4 (und geschlossenen Zündtransistoren 309, 309') möglich ist. Das Safingschaltelement 4 ist nur dann durchgeschaltet, wenn an beiden Ausgängen 314 und 316 Schaltsignale hohen Pegels abgegeben werden, durch die der Transistor 318 durchgeschaltet und der Transistor 321 gesperrt wird. Dies ist nur dann der Fall, wenn sowohl die Halteschaltung 2 als auch die Halteschaltung 2' jeweils positive Ausgangssignale erzeugen, durch die angezeigt wird, daß die jeweiligen Eingangssignale noch aktuell vorhanden sind oder zumindest vor weniger als der Haltezeitdauer abgeklungen sind. Dies erlaubt eine Durchschaltung des Safingschaltelements 4 für ein gewisses Zeitintervall auch nach bereits abgeklungenem Eingangssignal, jedoch nur für ein vorgegebenes Zeitintervall.

Durch das UND-Glied 315, das in Abhängigkeit vom Ausgangssignal der Halteschaltung 2 gesteuert wird, wird eine zusätzliche Redundanz erreicht, da nach Ablauf der Haltedauer der Halteschaltung 2, d.h. nach mehr als 100 ms nach erneutem Öffnen des mechanischen Safingschalters 13, an keinem Ausgang 314 und 316 mehr ein Ausgangssignal erzeugt wird, selbst wenn eine (verspätete) Zündentscheidung von dem Berechnungsabschnitt 305 erzeugt werden sollte. Das UND-Glied 315 kann gegebenenfalls aber auch entfallen, so daß dann der Ausgang der Halteschaltung 2 direkt mit dem Ausgang 316 verbunden ist. Weiterhin wird durch die kürzere Zeitdauer, auf die die Halteschaltung 2' im Vergleich zur Halteschaltung 2 eingestellt ist, gewährleistet, daß die Safingfunktion nur während eines begrenzten Zeitabschnitts nach Abklingen des Zündsignals freigebbar, d.h. das Safingschaltelement 4 durchschaltbar ist.

Bei der Zündschaltung ist das Safingschaltelement 4 somit redundant zum Safingschalter 13 ausgebildet und wird selektiv durch die beiden, an den Ausgängen 314 und 316 abgegebenen Schaltsignalen in Abhängigkeit von unterschiedlichen Schaltkriterien (Schließzustand des mechanischen Safingschalters 13; Erzeugung des Zündsignals für die Zündstufe 2) gesteuert. Durch die Notwendigkeit, daß zwei Anschlüsse des Mikrokontrollers (Steuereinrichtung) 9 zur Durchschaltung des Safingschaltelements 4 aktiviert werden müssen, ergibt sich höhere Sicherheit gegenüber einer fehlerhaften Einschaltung des Safingschaltelements. Hardware und Software sind gewissermaßen doppelt, d.h. redundant ausgeführt, so daß sich erhöhte Sicherheit ergibt.

Zur Erhöhung der Redundanz und damit der Funktionszuverlässigkeit ist bei der erfindungsgemäßen Ausgestaltung weiterhin eine zusätzliche Spannungsversorgung für die die Zündpille 8 enthaltende Zündstrecke vorgesehen. Hierzu ist der Ausgang des Safingschalters 13 über eine Leitung 324 mit einem Verbindungspunkt 326 zwischen dem Safingschaltelement 4 und dem Zündtransistor 309 verbunden, so daß bei geschlossenem mechanischen Safingschalter 13 eine Versorgungsspannung an den Verbindungspunkt 326 angelegt ist, die bei Durchschaltung der Zündtransistoren 309 und 309' zum Zünden der Zündpille 8 ausreichend ist. In die Verbindungsleitung 324 ist eine Diode 325 eingeschaltet, die einen Stromfluß in Gegenrichtung, beispielsweise vom Safingschaltelement 324 zu der ersten Zündstufe 6, verhindert. Die Verbindungsleitung 324 kann alternativ statt mit dem Ausgang des Safingschalters 13 auch intern mit der ersten Zündstufe 6 verbunden sein, beispielsweise mit einem Verbindungspunkt, der während der Zündung der Zündpille der ersten Zündstufe 6 und gegebenenfalls für ein gewisses Zeitintervall im Anschluß hieran an Spannung liegt. Die Spannungsspeisung des Verbindungspunkts 326 über die Verbindungsleitung 324 wird in diesem Fall dann vorteilhafterweise erst frühestens mit dem Beginn der Zündung der ersten Zündstufe 6, und nicht schon mit dem Schließen des mechanischen Safingschalters 13, begonnen. Diese zusätzliche Spannungsversorgung kann auch unabhängig von der vorstehend erläuterten Ausgestaltung des Safingschaltelements und dessen Ansteuerung realisiert sein.

## Patentansprüche

1. Elektrische Zündschaltung für ein Kraftfahrzeug-Insassenschutzsystem, mit mindestens zwei Zündstufen (6, 6') zur Auslösung einer zumindest zweistufig zündbaren Insassenschutzkomponente, wobei jede Zündstufe (6, 6') mindestens eine Zündpille (8) und ein mit dieser in Reihe geschaltetes und durch eine Steuereinrichtung (9) steuerbares Schaltelement (7, 309, 309') aufweist, und mit einem Safingschalter (1; 13), der auf einen physikalischen Parameter anspricht und bei Überschreiten eines bestimmten Schwellwerts eine Stromspeisung mindestens einer der Zündstufen freigibt, ansonsten aber sperrt,
**dadurch gekennzeichnet,**
**daß** die zur Zündung der zweiten Stufe der Insassenschutzkomponente vorgesehene zweite Zündstufe (6') zusätzlich mit einem elektronischen Safingschaltelement (4) verbunden ist, dessen Steueranschluß mit dem Safingschalter (1; 13) gekoppelt ist und das durch den Safingschalter (1; 13) in den durchgeschalteten Zustand bringbar ist und
**daß** zwischen den Safingschalter (1; 13) und den Steueranschluß (320) des Schaltelements (4) eine Halteschaltung (2), geschaltet ist, die bei Schließen des Safingschalters (1; 13) aktiviert wird und an den Steueranschluß (320) ein Treibersignal mit einer bestimmten Mindestzeitdauer anliegt.

2. Zündschaltung nach Anspruch 1, **dadurch gekennzeichnet, daß** die Halteschaltung (2) eine Zeitverzögerungsfunktion enthält und das Treibersignal erst nach einer vorbestimmten Verzögerungszeitdauer nach dem Schließen des Safingschalters (1;13) an das Schaltelement (4) anliegt.

3. Zündschaltung nach einem der vorhergehenden Ansprüche, **dadurch gekennzeichnet, daß** der Safingschalter (1; 13) als mechanischer Triggerschalter (1; 13) ausgebildet ist, der bei Auftreten eines einen Unfall signalisierenden, vom Triggerschalter (1; 13) überwachten physikalischen Parameters lediglich das Schaltsignal für das Schaltelement (4) erzeugt, nicht aber den Zündpillen-Zündstrom führt.

4. Zündschaltung nach einem der vorhergehenden Ansprüche, **dadurch gekennzeichnet, daß** die zur Zündung der ersten Stufe der Insassenschutzkomponente vorgesehene erste (6) direkt mit dem Safingschalter (1; 13) verbunden ist, sodaß bei einer Zündfreigabe der ersten Zündstufe (6)der Safingschalter den dafür erforderlichen Zündstrom trägt.

5. Zündschaltung nach Anspruch 4, **dadurch gekennzeichnet, daß** die Zündstufen (6, 6') getrennte Energiespeicherkondensatoren (5, 15) aufweisen, von denen der eine mit dem Safingschalter (1; 13) und der andere mit dem Schaltelement (4) verbunden sind.

6. Zündschaltung nach einem der vorhergehenden Ansprüche, **dadurch gekennzeichnet, daß** das elektronische Schaltelement (4) ein Transistor ist.

7. Zündschaltung nach einem der vorhergehenden Ansprüche, **dadurch gekennzeichnet, daß** die Steuereinrichtung (9) so ausgelegt ist, daß sie zur Steuerung des Schaltzustands des Safingschaltelements (22) zwei unterschiedliche Schaltsignale in Abhängigkeit von unterschiedlichen Kriterien, insbesondere abhängig vom Zustand des Safingschalters (1; 13) und einer für die zweite Zündstufe (6') getroffenen Zündentscheidung der Steuereinrichtung (9) erzeugt.

8. Zündschaltung nach Anspruch 8, **gekennzeichnet durch** ein logisches Verknüpfungsglied (315), das die beiden Schaltsignale zur Bildung eines Steuersignals für das Safingschaltelement (4) verknüpft.

9. Zündschaltung nach Anspruch 9, **dadurch gekennzeichnet, daß** die logische Verknüpfungsschaltung (315) als UND-Glied ausgebildet ist.

10. Zündschaltung nach einem der vorhergehenden Ansprüche, **dadurch gekennzeichnet, daß** die Steuereinrichtung (9) als Mikrokontroller oder Mikroprozessor ausgebildet ist und die beiden Schaltsignale an unterschiedlichen Ausgängen (314, 316) desselben abgegeben werden.

11. Zündschaltung nach einem der vorhergehenden Ansprüche, **gekennzeichnet durch** eine Halteschaltung (2), deren Eingang mit einer den Schaltzustand des Safingschalters (1; 13) erfassenden Überwachungseinrichtung (310) verbunden ist und deren Ausgangssignal das erste Schaltsignal bildet.

12. Zündschaltung nach einem der vorhergehenden Ansprüche, **gekennzeichnet durch** eine zweite Halteschaltung (2'), deren Eingang ein von der Steuereinrichtung (9) zum Auslösen der zweiten Zündstufe (6') erzeugtes Zündsignal zugeführt wird, und deren Ausgangssignal, gegebenenfalls nach Verknüpfung mit dem ersten Schaltsignal, das zweite Schaltsignal bildet.

13. Zündschaltung nach einem der vorhergehenden Ansprüche, **dadurch gekennzeichnet, daß** zusätzlich zu der über das Safingschaltelement (4) bereitgestellten Spannungsversorgung der zweiten Zündstufe (6') eine zweite Spannungsversorgung vorgesehen ist.

14. Zündschaltung nach Anspruch 13, **dadurch gekennzeichnet, daß** die zweite Spannungsversorgung eine mit dem Ausgang des Safingschalters (1;13) oder mit der ersten Zündstufe (6) verbundene Verbindungsleitung (324) umfaßt, die an den Eingang eines Zündtransistors (39) der zweiten Zündstufe (6') angeschlossen ist.

15. Zündschaltung nach Anspruch 14, **gekennzeichnet durch** eine in die Verbindungsleitung (324) eingefügte Diode (325).

16. Kraftfahrzeug-Insassenschutzsystem mit mindestens einer bei einem Kraftfahrzeugunfall auszulösenden, mehrstufig auslösbaren Insassenschutzkomponente, insbesondere einem Airbag oder einem Gurtstrammer, und einer Zündschaltung zur Auslösung der Insassenschutzkomponente, **dadurch gekennzeichnet, daß** die Zündschaltung gemäß einem der Ansprüche 1 bis 15 ausgebildet ist.

## Claims

1. Electric ignition circuit for a vehicle occupant protection system with at least two triggering stages (6, 6') for releasing an occupant protection component that can be triggered in at least two stages, with each triggering stage (6, 6') having at least one igniter (8) and a switch element (2, 309, 309') that is connected in series with it and which can be controlled by a control device (9), and with a safing switch (1; 13) which operates in response to a physical parameter and which, when a specific threshold is exceeded, enables current feeding of at least one of the triggering stages, but which otherwise blocks this,
**characterised in that**
the second triggering stage (6') provided for triggering the second stage of the occupant protection component is additionally connected to an electronic safing switch element (4) whose control terminal is coupled to the safing switch (1; 13) and which can be put into the gated state by the safing switch (1; 13), and
**in that** connected between the safing switch (1; 13) and the control terminal (320) of the switch element (4) is a holding circuit (2) which is activated when the safing switch (1; 13) closes and applies a driver signal to the control terminal (320) for a specific minimum length of time.

2. Ignition circuit according to Claim 1,
**characterised in that**
the holding circuit (2) contains a delay function and does not apply the driver signal to the switch element (4) until after a specified delay after the safing switch (1;13) has closed.

3. Ignition circuit according to one of the preceding claims,
**characterised in that**
the safing switch (1; 13) is designed as a mechanical trigger switch (1; 13) which, on the appearance of a physical parameter which signals an accident and which is monitored by the trigger switch (1; 13), only generates the switching signal for the switch element (4) but does not carry the ignitertriggering current.

4. ignition circuit according to one of the preceding claims,
**characterised in that**
the first triggering stage (6) provided for triggering of the first stage of the occupant protection component is connected directly to the safing switch (1; 13), so that the safing switch will carry the necessary triggering current when the first triggering stage (6) is trigger-enabled.

5. Ignition circuit according to Claim 4,
**characterised in that**
the triggering stages (6, 6') have separate energy-storing capacitors (5, 15) one of which is connected to the safing switch (1; 13) and the other of which is connected to the switch element (4).

6. Ignition circuit according to one of the preceding claims,
**characterised in that**
the electronic switch element (4) is a transistor.

7. Ignition circuit according to one of the preceding claims,
**characterised in that**
the control device (9) is designed so that for controlling the switching status of the safing switch element (22) it generates two different switching signals as a function of different criteria, depending in particular on the status of the safing switch (1; 13) and on a triggering decision of control device (9) made for the second stage (6').

8. Ignition circuit according to Claim 8, **characterised by** a logic element (315) which gates the two switching signals to form a control signal for the sating switch element (4).

9. Ignition circuit according to Claim 9,
**characterised in that**
the logic circuit (315) is designed as an AND element.

10. Ignition circuit according to one of the preceding claims,
**characterised in that**
the control device (9) is designed as a microcontroller or microprocessor and that the two switching signals are fed out at different outputs (314, 316) of this.

11. Ignition circuit according to one of the preceding claims, **characterised by** a holding circuit (2) whose input is connected to a monitoring device (310) registering the switching status of the safing switch (1; 13) and whose output signal forms the first switching signal.

12. Ignition circuit according to one of the preceding claims, **characterised by** a second holding circuit (2') to whose input an ignition signal generated by the control device (9) for releasing the second triggering stage (6') is routed and whose output signal, where applicable after logical linking with the first switching signal, forms the second switching signal.

13. Ignition circuit according to one of the preceding claims,
**characterised in that**
a second power supply is provided in addition to the power supply, made available via the safing switch element (4), of the second triggering stage (6').

14. Ignition circuit according to Claim 13,
**characterised in that**
the second power supply contains a connection lead (324), connected to the output of the safing switch (1;13) or to the first triggering stage (6), which is connected to the input of a triggering transistor (39) of the second triggering stage (6').

15. Ignition circuit according to Claim 14, **characterised by** a diode (325) inserted into the connection lead (324).

16. Vehicle occupant protection system with at least one occupant protection component that releases in the event of a vehicle accident and which can be released in several stages, in particular an airbag or belt tightener, and an ignition circuit for releasing the occupant protection component,
**characterised in that**
the ignition circuit is designed according to one of the Claims 1 to 15.

## Revendications

1. Circuit de déclenchement électrique pour un système de protection des passagers d'un véhicule automobile, comportant au moins deux niveaux de déclenchement (6, 6') permettant de déclencher un composant de protection des passagers pouvant être déclenché au moins à deux niveaux, où chaque niveau de déclenchement (6, 6') présente au moins un amorceur (8) et un élément de commutation (7, 309, 309') pouvant être commandé par un dispositif de commande (9) et activé en ligne avec cet amorceur, et comportant un commutateur de sécurité (1 ; 13), qui réagit à un paramètre physique et qui permet d'alimenter en tension au moins l'un des niveaux de déclenchement lorsqu'une valeur seuil donnée est dépassée ou qui permet de bloquer cette alimentation dans le cas contraire,
**caractérisé en ce que**
le deuxième niveau de déclenchement (6') prévu pour le déclenchement du deuxième niveau du composant de protection des passagers est en outre raccordé à un élément de commutation de sécurité électronique (4), dont la connexion de commande est raccordée au commutateur de sécurité (1 ; 13) et qui peut être amené dans une position de commutation par le biais du commutateur de sécurité (1; 13) et **en ce qu'**
entre le commutateur de sécurité (1 ; 13) et la connexion de commande (320) de l'élément de commutation (4) est activé un circuit de rétention (2), qui est activé lors de la fermeture du commutateur de sécurité (1 ; 13) et qui émet au niveau de la connexion de commande (320) un signal pilote ayant une durée minimale donnée.

2. Circuit de déclenchement selon la revendication 1, **caractérisé en ce que** le circuit de rétention (2) contient une fonction de retardement et émet le signal pilote au niveau de l'élément de commutation (4) uniquement après une période de retardement prédéterminée suivant la fermeture du commutateur de sécurité (1 ; 13).

3. Circuit de déclenchement selon l'une des revendications précédentes, **caractérisé en ce que** le commutateur de sécurité (1 ; 13) est configuré sous la forme d'un commutateur de déclenchement mécanique (1; 13), qui génère le signal de commutation pour l'élément de commutation (4) uniquement après l'apparition d'un paramètre physique surveillé par le commutateur de déclenchement (1; 13) et signalant un accident, mais qui ne transporte pas le courant de déclenchement de l'amorceur.

4. Circuit de déclenchement selon l'une des revendications précédentes, **caractérisé en ce que** le premier niveau de déclenchement (6) prévu pour le déclenchement du premier niveau du composant de protection des passagers est raccordé directement au commutateur de sécurité (1 ; 13), de telle sorte que lors du déclenchement du premier niveau de déclenchement (6), le commutateur de sécurité transporte le courant de déclenchement nécessaire.

5. Circuit de déclenchement selon la revendication 4, **caractérisé en ce que** les niveaux de déclenchement (6, 6') présentent des condensateurs de stockage d'énergie (5, 15) distincts, le premier étant relié au commutateur de sécurité (1; 13) et le deuxième étant relié à l'élément de commutation (4).

6. Circuit de déclenchement selon l'une des revendications précédentes, **caractérisé en ce que** l'élément de commutation électronique (4) est un transistor.

7. Circuit de déclenchement selon l'une des revendications précédentes, **caractérisé en ce que** le dispositif de commande (9) est conçu de telle sorte qu'il génère deux signaux de commutation différents pour commander la position de commutation de l'élément de commutation de sécurité (22) en fonction de différents critères, en particulier en fonction de la position du commutateur de sécurité (1 ; 13) et d'une décision de déclenchement prise par le dispositif de commande (9) pour le deuxième niveau de déclenchement (6').

8. Circuit de déclenchement selon la revendication 7, **caractérisé par** un organe d'association logique (315) qui associe les deux signaux de commutation pour former un signal de commande pour l'élément de commutation de sécurité (4).

9. Circuit de déclenchement selon la revendication 8, **caractérisé en ce que** le circuit d'association logique (315) est configuré sous la forme d'un opérateur ET.

10. Circuit de déclenchement selon l'une des revendications précédentes, **caractérisé en ce que** le dispositif de commande (9) est configuré sous la forme d'un microcontrôleur ou d'un microprocesseur et **en ce que** les deux signaux de commutation sont émis au niveau de deux sorties distinctes (314, 316) de ce dispositif de commande.

11. Circuit de déclenchement selon l'une des revendications précédentes, **caractérisé par** un circuit de rétention (2) dont l'entrée est raccordée à un dispositif de surveillance (310) enregistrant la position de commutation du commutateur de sécurité (1 ; 13) et dont le signal de sortie forme le premier signal de commutation.

12. Circuit de déclenchement selon l'une des revendications précédentes, **caractérisé par** un deuxième circuit de rétention (2'), dont l'entrée est affectée à un signal de déclenchement généré par le dispositif de commande (9) pour déclencher le deuxième niveau de déclenchement (6') et dont le signal de sortie forme le deuxième signal de commutation, le cas échant après association avec le premier signal de commutation.

13. Circuit de déclenchement selon l'une des revendications précédentes, **caractérisé en ce qu'**une deuxième alimentation en tension est prévue en plus de l'alimentation en tension du deuxième niveau de déclenchement (6') mise à disposition par l'élément de commutation de sécurité (4).

14. Circuit de déclenchement selon la revendication 13, **caractérisé en ce que** la deuxième alimentation en tension comprend une ligne de raccordement (324) raccordée à la sortie du commutateur de sécurité (1 ; 13) ou au premier niveau de déclenchement (6), et raccordée également à un transistor de déclenchement (39) du deuxième niveau de déclenchement (6').

15. Circuit de déclenchement selon la revendication 14, **caractérisé par** une diode (325) introduite dans la ligne de raccordement (324).

16. Système de protection des passagers d'un véhicule automobile, comportant au moins un composant de protection des passagers pouvant être déclenché à plusieurs niveaux et devant être déclenché lors d'un accident de voiture, en particulier un airbag ou un dispositif de pré-charge, et comportant également un circuit de déclenchement permettant de déclencher le composant de protection des passagers, **caractérisé en ce que** le circuit de déclenchement est configuré conformément à l'une quelconque des revendications 1 à 15.
